# EUROPEAN PATENT SPECIFICATION

(11) **EP 3 216 649 B1**
(45) Date of publication and mention of the grant of the patent: **23.01.2019**
(21) Application number: 17275031.7
(22) Date of filing: 07.03.2017
(51) Int. Cl.: B60N 3/00, A47B 13/00

(54) **A METHOD OF MANUFACTURING A TABLE**
VERFAHREN ZUR HERSTELLUNG EINES TISCHS
PROCÉDÉ DE FABRICATION D'UNE TABLE

(30) Priority: 08.03.2016 GB 201603959
(43) Date of publication of application: 13.09.2017
(73) Proprietor: Bentley Motors Limited, Crewe, Cheshire CW1 3PL (GB)
(72) Inventor: Minshull, Adrian John, Crewe, Cheshire CW2 8QQ (GB); Day, Steve, Winsford, Cheshire CW7 1PF (GB)
(74) Representative: Wilson Gunn

(56) References cited:
- WO-A1-2015/143021
- DE-A1- 3 642 959
- DE-C1- 3 421 547

## Description

### Technical Field of the Invention

The present invention relates to a table for a vehicle and a method of manufacturing a table for a vehicle, and particularly but not exclusively to a method for manufacturing drop-down seat-back table for a motor vehicle, such as an automobile.

### Background to the Invention

Drop-down tables mounted to the back of a front seat of a motor vehicle may be manufactured from many different materials, such as wood or metal. The conventional method of manufacturing a picnic table from wood involves machining many individual parts and using a plurality of fixings to construct an outer structure, which houses an internal frame that supports an outer panel. This arrangement provides a hollow within the structure to reduce the weight of the picnic table.
This conventional method is complex, expensive and time consuming, and due to the large number of parts and the consequent large number of joints, the resulting picnic table cannot withstand extremes of temperature or moisture.

Embodiments of the present invention seek to address the above problems.

DE 3642959 discloses a method of manufacturing a desk from wood substitutes such as chipboard. Recesses are machined into two pieces of chipboard and an inner face of at least one piece is bevelled. The inner faces of the two pieces are then glued together to form a desk with an external chamfer.

### Summary of the Invention

According to a first aspect of the present invention, there is provided a method of manufacturing a table for a vehicle, the method comprising the steps of:
a) providing a single piece of material and splitting the single piece of material to form two or more portions of material;
b) machining at least one recess into a face of at least one of the portions of material; and
c) assembling the portions of material together to form a table having at least one cavity.

In this way, the method of the present invention forms a sturdy, lightweight table for a vehicle by machining a recess into a portion of a material, rather than by a convoluted method of constructing an internal frame and housing it within an outer structure. Accordingly, since the number of process steps used is greatly reduced, the present invention provides a much faster and simpler method for manufacturing a table for a vehicle. In addition, since the number of parts used to manufacture the table is also greatly reduced, the table is lighter than one manufactured with the conventional method and is better able to withstand extremes of temperature and moisture.

The table may be for a motor vehicle. The table may be a picnic table. The table may be a fold-down or a drop-down table. The table may fold down or drop down from a seat of a vehicle or a motor vehicle, in particular from the rear or back of a front seat of a vehicle or a motor vehicle. The motor vehicle may be an automobile.

The single piece of material may be split into the two or more portions of material by cutting using a saw, in particular a band saw. The single piece of material may preferably be split into two portions of material. Each of the portions of material may be of a substantially similar size and/or shape.

The method may further comprise a step of machining the single piece of material. In particular, the machining of the single piece of material may involve pressing the material through a planer. In this way, the single piece of material is pre-machined so that it has smooth, flat and even surfaces.

The single piece of material may be a piece of wood (or timber), metal or a plastic. In particular, the single piece of material may be a billet, chunk or block ofwood. Specifically, the single piece of material, or billet, chunk or block of wood, may be walnut, oak or cherry. The single piece of material may be substantially cuboid shaped, with two long parallel sides and two short parallel sides.

The method may further comprise a step of machining the two of more portions of material so that they are the same size and shape. In particular, this machining may involve pressing each of the two or more portions of material through a planer to create flat and even surfaces, and/or cutting the portions of material to a required thickness, width and length. This cutting may be with a saw, for example a dim saw. Specifically, each of the portions of material may be machined to have a thickness of around 14mm, a width of around 210mm and a length of around 377mm.

At least one recess may be machined into a face of each of the two or more portions of material. A plurality of recesses may be machined into a face of each of the two or more portions of material. The recess or recesses machined into one portion of material may correspond with the recess or recesses machined into another portion of material. The recess or recesses may be machined so that they do not penetrate through the whole depth of each of the two or more portions of material. Thus, the recess or recesses are blind. The recess or recesses may be substantially rectangular shaped. The recess or recesses may be elongate. The recess or recesses may be machined into each face by a computer numerical control (CNC) tool. The recess or recesses may be machined into each face by a router. The recess or recesses are preferably machined to a depth of around 8mm.

At least one dowel hole may be machined into a face of at least one of the portions of material. In particular, at least one dowel hole may be machined into a face of at least one of the portions of material at the same time as machining the recess or recesses. A plurality of dowel holes may be machined into a face of at least one of the portions of material. One or a plurality of dowel holes may be machined into a face of each of the portions of material. The dowel hole or holes may be machined to a depth of around 8mm so as to not penetrate through the portion of material. Thus the dowel holes or holes may be blind. The dowel hole or holes may be machined into each face by a computer numerical control (CNC) tool. The dowel hole or holes may be machined into each face by a router or drill.

The portions of material may be assembled together by using attachment means. The attachment means may comprise one or more dowels or a plurality of dowels. In particular, the attachment means may comprise two dowels. The attachment means may comprise glue.

The portions of material may be assembled in an arrangement where one or more recesses in a first portion of material are oriented towards one or more recesses in a second portion of material. In this way, when assembling the table, the recesses oftwo or more portions of material are oriented to face each other and thus they may cooperate to form a cavity.

The method may further comprise a step of machining a slot or channel into the table for engaging with a bracket on a vehicle. The slot may be cut into the table. The slot may be machined or cut along the base of the table. The slot may be machined or cut so that it extends over most or all of the full length of the table. In this way, a slot or channel is provided so that the table can be mounted on to a vehicle to act as a drop-down table.

The method may further comprise a step of machining a recess to form a handle into at least one of the portions of the two or more material. The handle may be machined into one of the two or more portions of material. The handle may be cut into the one of the portions of material. The handle may be machined or cut into one of the portions of the material in a part of the material where there is no recess. The handle may be machined or cut into the centre of the table, with respect to its length. The handle may be machined or cut towards the top of the table. The handle may be formed substantially midway along and adjacent to an edge of the table, which may be a long edge of the table. The handle may be machined or cut into at least one of the portions of material after they have been assembled to form a table.

The method may further comprise a step of applying a wood veneer or other decorative veneer or material to a surface of the table. The wood veneer or decorative veneer may be applied to multiple surfaces of the table. The wood veneer or decorative veneer may be applied to both flat faces of the table. In this way, a veneer may be applied to a cut surface of the table to hide the cut surface and provide an aesthetically pleasing decorative finish.

The method may further comprise a step of machining the table to a final size and shape.

The method may further comprise a step of applying a lacquer and/or polish to a surface of the table.

The method may further comprise the step of mounting the table to a vehicle such as to the back of a seat of the vehicle.

According to a second aspect of the invention, there is provided a table for a vehicle, the table comprising two or more portions of material assembled together, wherein at least one of the portions has a recess machined into it so as to form a cavity within the table. The material may be wood.

According to a third aspect of the invention, there is provided a seat for a vehicle, the seat comprising a table according the second aspect of the invention.

According to a fourth aspect of the invention, there is provided an automobile comprising a table according to the second aspect of the invention.

According to a fifth aspect of the invention, there is provided an automobile comprising a seat according to the third aspect of the invention.

The second, third, fourth and fifth aspects of the invention may comprise any feature of the first aspect of the invention.

### Detailed Description of the Invention

In order that the invention may be more clearly understood embodiments thereof will now be described, by way of example only, with reference to the accompanying drawings, of which:
- Figure 1: is a perspective view of a single piece of material;
- Figure 2: is a perspective view of the single piece of material in Figure 1 when separated into two portions of material;
- Figure 3: is a perspective view of the two portions of material in Figure 2 with a plurality of recesses machined into a face of each of the portions of material;
- Figure 4: is a perspective view of the two portions in Figure 3 when assembled back together;
- Figure 5: is a perspective cross-section view of Figure 4, along line A-A;
- Figure 6: is a side view of Figure 5;
- Figure 7: is a perspective view of a seat; and
- Figure 8: is a perspective view of an automobile.

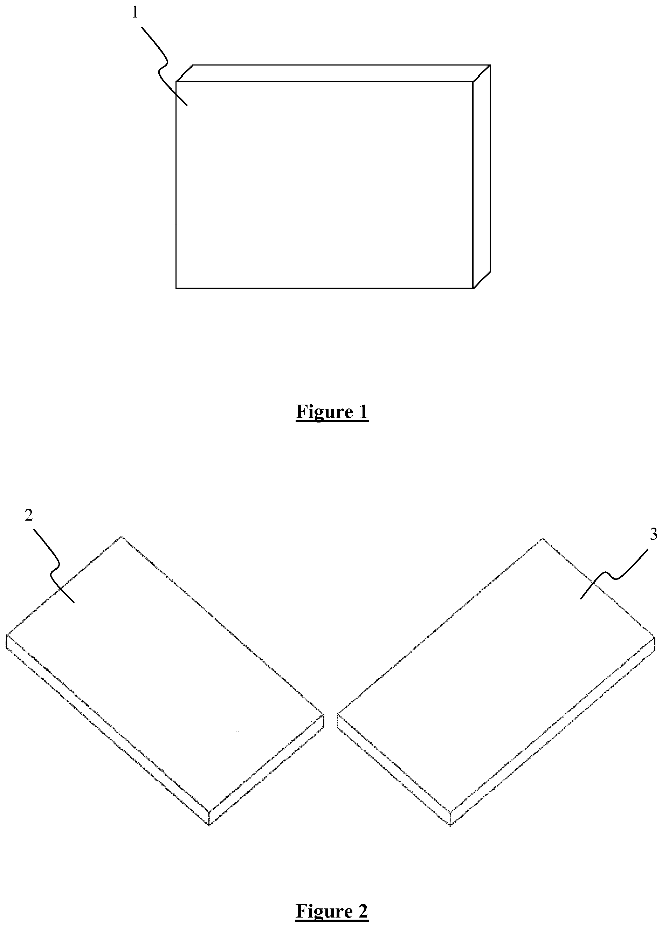

Figures 1 to 6 illustrate a method of manufacturing a table for a vehicle according to an embodiment of the present invention.

Figure 1 illustrates a single piece of material. In this embodiment, the material 1 is wood, or timber, and in particular, walnut. The single piece of material 1 is pre-machined by pressing it through a planer to produce flat and even surfaces. The single piece of material 1 is substantially cuboid shaped with two long parallel sides and two short parallel sides. The single piece of material 1 is machined to a specific processing size.

Figure 2 illustrates the product of step a). The single piece of material 1 is cut in half along its longitudinal axis by using a band saw, so as to form two sheet-like portions of material; a first portion 2 and a second portion 3. Each of the first portion 2 and the second portion 3 are then pressed through a planer to create flat and even surfaces. The first portion 2 and the second portion 3 are then cut to the desired thickness, length and width by using, for example, a dim saw. The first portion 2 and the second portion 3 are cut and planed so that they are the same size. Specifically, the first portion 2 and the second portion 3 are machined so that they each have a thickness of around 14mm, a width of around 210mm and a length of around 377mm.

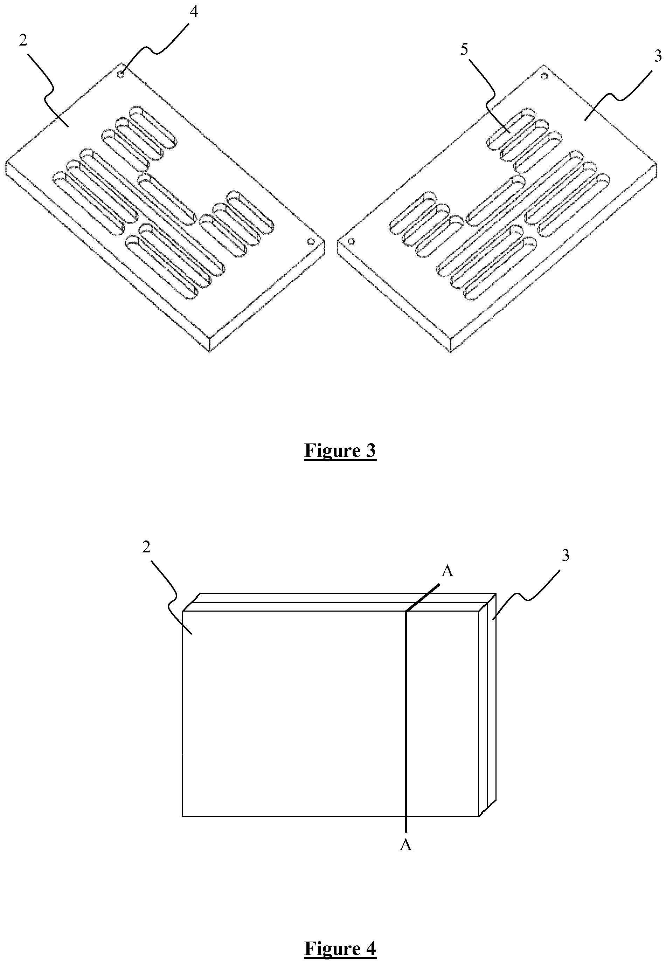

Figure 3 illustrates the product of step b). A plurality of dowel holes 4 and recesses 5 are machined into a face of the first portion 2 and the second portion 3 by a computer numerical control (CNC) router. The dowel holes 4 and recesses 5 are machined to a specified depth of around 8mm. Thus, they do not break through to the other face of the first portion 3 and the second portion 3. In this embodiment, a dowel hole 4 is machined into the two upper corners of each of the first portion 2 and the second portion 3. The plurality of recesses 5 are machined in an arrangement that reduces the weight of each of the first portion 2 and the second portion 3 but doesn't compromise the structural integrity of each portion 2, 3.

As shown in Figure 3, the arrangement of the plurality of recesses 5 comprises seven rows. The recesses 5 in each row are arranged symmetrically about the centre of the portions 2, 3. Each recess 5 has a substantially cuboid shape, with two long parallel sides and two short curved sides connecting the two long parallel sides.

Figure 4 illustrates the product of step c). The first portion 2 and the second portion 3 are prepared to be reassembled back together to form a table 6. A dowel is inserted into each of the dowel holes 4 on the face of the first portion 2. Glue is then applied to the face of the first portion 2, taking care not to get glue in any of the plurality of recesses 5. The second portion is 3 then placed over the first portion 2 and the dowels and respective dowel holes 4 are used to align the first portion 2 with the second portion 3. This serves to align the recesses in one portion with the recesses in the other portion. The two portions 2, 3 are then forced together by using a press operating at a pressure of 1 bar for 30 minutes whilst the glue sets.

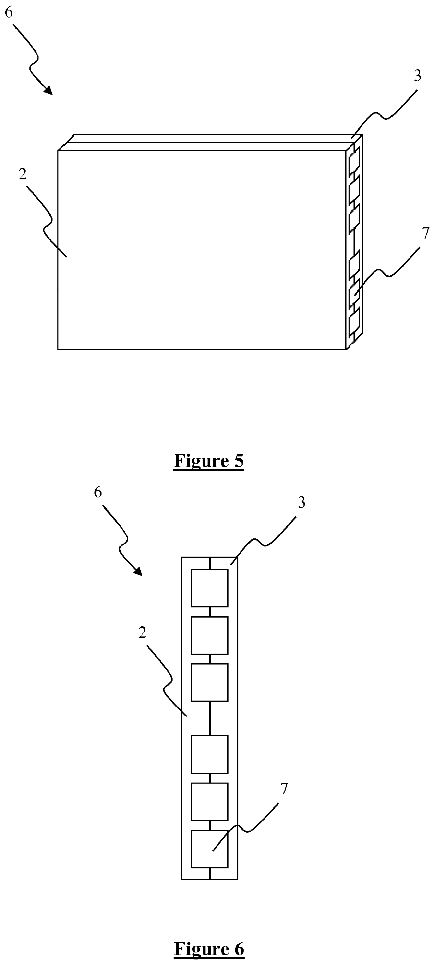

Figures 5 and 6 illustrate that the plurality of recesses 5 in the first portion 2 and second portion 3 cooperate to form a plurality of cavities 7 in the assembled table 6.

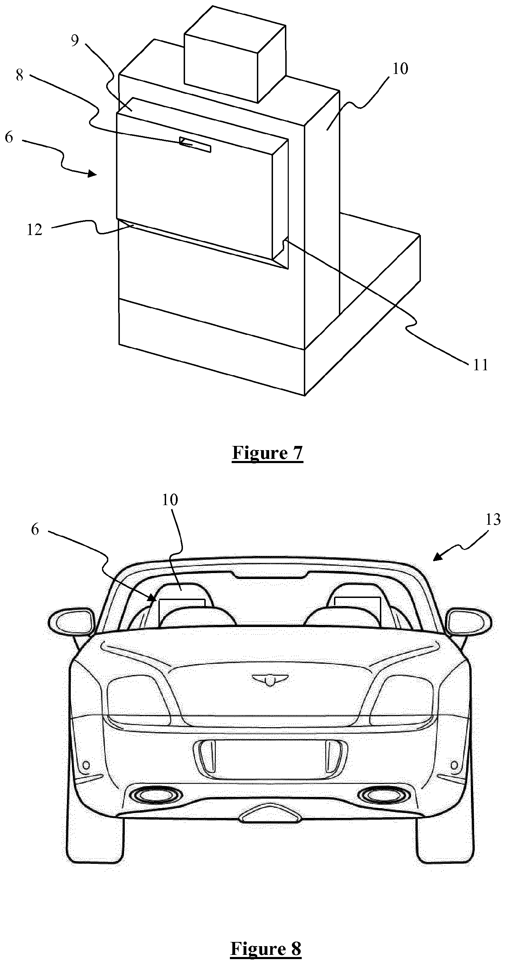

Figure 7 illustrates a seat 10 comprising a table 6 as described above. The table 6 is fitted to the rear of the seat 10 so that it can pivot relative to the seat back along a generally horizontal axis between a storage position (shown in Figure 7) where the table 6 is upright and generally parallel to the seat back and an in use position where the table 6 is generally horizontal and projects from the seat back. In this embodiment, the table 6 comprises a slot 11 that has been cut along the base of the table 6 during its method of manufacture so that the table 6 can be mounted onto a bracket 12 fixed to the seat 10. The table 6 also comprises a large recess 8 that has been cut into the outside face of the assembled table 6, in a gap where there is no recess 5, to act as a handle. The table 6 also comprises a veneer 9 that has been glued on to the large, flat surfaces of the table 6 in order to provide a decorative finish.

Figure 8 illustrates an automobile 13 comprising a seat 10 with a table 6 as described above. The table 6 is fitted to the rear of a front seat 10 of the automobile.

The above embodiments are described by way of example only. Many variations are possible without departing from the scope of the invention as defined in the appended claims.

## Claims

1. A method of manufacturing a table (6) for a vehicle, the method comprising the steps of:
a) providing two or more portions (2,3) of material;
b) machining at least one recess (5) into a face of at least one of the portions of material; and
c) assembling the portions of material together to form a table having at least one cavity (7),
**characterised in that** the two or more portions (2, 3) of material are provided by splitting a single piece (1) of material.

2. A method according to claim 1, wherein the table is a picnic table for an automobile (13).

3. A method according to any preceding claim, wherein the table is a drop-down table, preferably for dropping down from the rear of a front seat (10) of a motor vehicle.

4. A method according to any preceding claim, wherein the single piece of material is a piece of wood.

5. A method according to any preceding claim, further comprising the step of: machining the single piece of material so that it has smooth, flat and even surfaces.

6. A method according to any preceding claim, wherein the single piece of material is separated into two portions of material of a substantially similar size and shape.

7. A method according to any preceding claim, further comprising the step of: machining the two of more portions of material so that they are the same size and shape.

8. A method according to any preceding claim, wherein a recess or a plurality of recesses is/are machined into a face of each portion of material.

9. A method according to claim 8, wherein the recess or recesses machined into a portion of material correspond with the recess or recesses machined into another portion of material.

10. A method according to any preceding claim, wherein the recess or recesses are machined so that they do not penetrate through the whole depth of the portion of material.

11. A method according to any preceding claim, wherein the portions of material are assembled together by using attachment means.

12. A method according to claim 11, wherein the attachment means comprises one or more dowels and/or glue.

13. A method according to any preceding claim, wherein the portions of material are assembled in an arrangement where one or more recesses in a first portion of material are oriented towards one or more recesses in a second portion of material.

14. A method according to any preceding claim, further comprising the step of: machining a slot or channel into the table for engaging with a bracket on a vehicle and/or machining a recess to form a handle into at least one of the portions of the material.

15. A method according to any preceding claim comprising the further step of mounting the table to a vehicle, preferably to the back of a seat of the vehicle.

## Patentansprüche

1. Verfahren zum Herstellen eines Tischs (6) für ein Fahrzeug, wobei das Verfahren die folgenden Schritte umfasst:
a) Bereitstellen von zwei oder mehr Bereichen (2, 3) aus Material;
b) maschinelles Einarbeiten wenigstens einer Aussparung (5) in eine Fläche von wenigstens einem der Bereiche aus Material; und
c) Zusammenfügen der Bereiche aus Material, um einen Tisch zu bilden, der wenigstens eine Aussparung (7) hat,
**dadurch gekennzeichnet, dass** die zwei oder mehr Bereiche (2, 3) aus Material durch Spalten eines einzigen Stücks (1) von Material bereitgestellt sind.

2. Verfahren nach Anspruch 1, wobei der Tisch ein Picknicktisch für ein Automobil (13) ist.

3. Verfahren nach einem der vorhergehenden Ansprüche, wobei der Tisch ein Klapptisch ist, vorzugsweise zum Herunterklappen von der Rückseite eines Vordersitzes (10) eines Motorfahrzeugs.

4. Verfahren nach einem der vorhergehenden Ansprüche, wobei das einzige Stück von Material ein Stück Holz ist.

5. Verfahren nach einem der vorhergehenden Ansprüche, ferner umfassend den Schritt des maschinellen Bearbeitens des einzigen Stücks von Material derart, dass es glatte, flache und gleichmäßige Oberflächen hat.

6. Verfahren nach einem der vorhergehenden Ansprüche, wobei das einzige Stück von Material in zwei Bereiche von Material mit im Wesentlichen gleicher Größe und Gestalt separiert wird.

7. Verfahren nach einem der vorhergehenden Ansprüche, ferner umfassend den Schritt des maschinellen Bearbeitens der zwei oder mehr Bereiche von Material derart, dass sie die gleiche Größe und Gestalt haben.

8. Verfahren nach einem der vorhergehenden Ansprüche, wobei eine Aussparung oder eine Mehrzahl von Aussparungen in eine Fläche von jedem Bereich von Material maschinell eingearbeitet wird/werden.

9. Verfahren nach Anspruch 8, wobei die Aussparung oder die Aussparungen, die in einen Bereich von Material maschinell eingearbeitet wird/werden, der Aussparung oder den Aussparungen entspricht, die in einen anderen Bereich von Material maschinell eingearbeitet wird/werden.

10. Verfahren nach einem der vorhergehenden Ansprüche, wobei die Aussparung oder die Aussparungen derart maschinell eingearbeitet wird/werden, dass sie nicht durch die gesamte Dicke des Bereichs von Material hindurchtritt/hindurchtreten.

11. Verfahren nach einem der vorhergehenden Ansprüche, wobei die Bereiche von Material unter Verwendung von Befestigungsmitteln zusammengefügt werden.

12. Verfahren nach Anspruch 11, wobei die Befestigungsmittel Stifte und/oder Klebstoff umfassen.

13. Verfahren nach einem der vorhergehenden Ansprüche, wobei die Bereiche von Material in einer Anordnung zusammengefügt werden, wo ein oder mehr Aussparungen in einem ersten Bereich von Material in Richtung von ein oder mehr Aussparungen in einem zweiten Bereich von Material orientiert sind.

14. Verfahren nach einem der vorhergehenden Ansprüche, ferner umfassend den Schritt des maschinellen Einarbeitens eines Schlitzes oder Kanals in den Tisch zum Eingriff mit einer Klammer an einem Fahrzeug, und/oder maschinelles Einarbeiten einer Aussparung zum Bilden eines Griffs in wenigstens einen der Bereiche des Materials.

15. Verfahren nach einem der vorhergehenden Ansprüche, umfassend den weiteren Schritt des Montierens des Tischs an einem Fahrzeug, vorzugsweise an der Rückseite eines Sitzes des Fahrzeugs.

## Revendications

1. Procédé de fabrication d'une table (6) pour un véhicule, le procédé comprenant les stades dans lesquels :
a) on se procure deux ou plusieurs portions (2, 3) de matériau;
b) on usine au moins un chambrage (5) dans une face d'au moins l'une des portions de matériau et
c) on assemble les portions de matériau ensemble pour former une table, ayant au moins une cavité (7),
**caractérisé en ce que** l'on se procure les deux ou plusieurs portions (2, 3) de matériau en fendant une pièce (1) unique de matériau.

2. Procédé suivant la revendication 1, dans lequel la table est une table de pique-nique pour une automobile (13).

3. Procédé suivant l'une quelconque des revendications précédentes, dans lequel la table est une table basculant vers le bas, de préférence en basculant de l'arrière d'un siège (10) avant d'un véhicule à moteur.

4. Procédé suivant l'une quelconque des revendications précédentes, dans lequel la pièce unique de matériau est une pièce de bois.

5. Procédé suivant l'une quelconque des revendications précédentes, comprenant, en outre, le stade dans lequel on façonne la pièce unique de matériau, de manière à lui donner des surfaces lisses, planes et unies.

6. Procédé suivant l'une quelconque des revendications précédentes, dans lequel la pièce unique de matériau est séparée en deux portions de matériau sensiblement de même forme et dimension.

7. Procédés suivant l'une quelconque des revendications précédentes, comprenant, en outre, le stade dans lequel on façonne les deux ou plusieurs portions de matériau, de manière à leur donner les mêmes forme et dimension.

8. Procédé suivant l'une quelconque des revendications précédentes, dans lequel on façonne un chambrage ou une pluralité de chambrages dans une face de chaque portion de matériau.

9. Procédé suivant la revendication 8, dans lequel le chambrage ou les chambrages façonnés dans une portion de matériau correspond au chambrage ou aux chambrages façonnés dans une autre partie de matériau.

10. Procédé suivant l'une quelconque des revendications précédentes, dans lequel on façonne le chambrage ou les chambrages, de manière à ce qu'ils ne pénètrent pas dans toute la profondeur de la portion de matériau.

11. Procédé suivant l'une quelconque des revendications précédentes, dans lequel on assemble les portions de matériau ensemble en utilisant un moyen de fixation.

12. Procédé suivant la revendication 11, dans lequel le moyen de fixation comprend une ou plusieurs chevilles et/ou de la colle.

13. Procédé suivant l'une quelconque des revendications précédentes, dans lequel les portions de matériau sont assemblées suivant un agencement dans lequel un ou plusieurs chambrages dans une première portion de matériau sont orientés vers un ou plusieurs chambrages dans une deuxième portion de matériau.

14. Procédé suivant l'une quelconque des revendications précédentes, comprenant, en outre, le stade dans lequel : on façonne une fente ou un canal dans la table pour la pénétration d'une console d'un véhicule et/ou on façonne un chambrage pour former une poignée dans au moins l'une des portions de matériau.

15. Procédé suivant l'une quelconque des revendications précédentes, comprenant le stade supplémentaire dans lequel on monte la table sur un véhicule, de préférence à l'arrière d'un siège du véhicule.
